# EUROPÄISCHE PATENTANMELDUNG

(11) **EP 2 219 056 A1**
(43) Veröffentlichungstag der Anmeldung: **18.08.2010**
(21) Anmeldenummer: 10151356.2
(22) Anmeldetag: 22.01.2010
(51) Int. Cl.: G02B 6/00

(54) **Scheibe mit mindestens einem integrierten Leuchtfeld**

(30) Priorität: 30.01.2009 DE 102009006856
(71) Anmelder: Saint-Gobain Glass France, 92400 Courbevoie (FR)
(72) Erfinder: Lisinski, Susanne, 50739, Köln (DE); Schall, Günther, 52372, Kreuzau (DE)
(74) Vertreter: Lendvai, Tomas

(57) **Zusammenfassung**

Scheibe mit mindestens einem Leuchtfeld umfassend:
a) eine Grundscheibe (1),
b) mindestens ein auf der Grundscheibe (1) aufgebrachtes Leuchtfeld (2) umfassend:
b.1) eine Trägermatrix,
b.2) Leuchtpartikel und

c) mindestens eine am Rand der Grundscheibe (1) angeordnete Leuchtquelle (3).

## Beschreibung

Die Erfindung betrifft eine Scheibe mit mindestens einem integrierten Leuchtfeld, ein Verfahren zu deren Herstellung und deren Verwendung.

Scheiben werden neben ihrer Hauptfunktion als lichtdurchlässiges Trennmedium in Gebäuden und Fahrzeugen aller Art auch im großen Maße als Dekor-, Informations- und Werbeträger genutzt. Die Scheiben können zu diesem Zweck sowohl beleuchtet als auch unbeleuchtet verwendet werden. Insbesondere durch geeignete Lichtquellen kann die Außenwirkung einer derartigen Scheibe deutlich gesteigert werden. Neben der an sich beleuchteten Scheibe, kommen so auch auf der Scheibe angebrachte Muster, Gravuren oder Schriftzeichen mehr zur Geltung. In Abhängigkeit vom Verwendungszweck können zudem verschiedene schaltbare Lichtquellen verwendet werden. So lassen sich beispielsweise farbige und getaktete Lichteffekte integrieren. Der Einsatzbereich beschränkt sich nicht nur auf die klassischen Fenster- und Schaufensterscheiben, sondern es lassen sich auch viele weitere Gebrauchs- und Einrichtungsgegenstände wie beispielsweise Möbel, Armaturen und Küchenelemente mit beleuchteten Scheibenelementen versehen. Auch im künstlerischen und architektonischen Bereich ergeben sich damit viele Einsatz- und Gestaltungsmöglichkeiten.

Werden Schriftzüge oder strukturierte Felder auf der Scheibe angebracht, so sind diese auch bei ausgeschalteter Beleuchtung in der Regel gut zu erkennen. Die Scheiben wirken daher im unbeleuchteten Zustand nicht vollständig transparent. Zudem können sich an diesen Stellen Schatten auf der Scheibe abzeichnen, die die Transparenz der Scheibe weiter vermindern. Weiterhin ist es schwierig und apparativ sehr aufwendig nur bestimmte Bereiche der Scheibe zu beleuchten und andere Bereiche der Scheibe unbeleuchtet zu halten.

Die EP 1 022 396 A2 offenbart eine Duschkombination mit einer teilweise aus Glas bestehenden Vorderfront die durch eine rückwärtige Beleuchtung oder entsprechende Lichtleiter beleuchtet wird. Die Vorderfront kann auch einzelne lichtdurchlässige Bereiche oder auch Skalen und Markierungen enthalten. Diese leuchten entweder bei eingeschaltetem Licht oder heben sich als lichtundurchlässige Bereiche vom hellen Hintergrund ab. Insgesamt ergeben sich so verschiedene Gestaltungsmöglichkeiten.

DE 31 42072 A1 offenbart einen Bilderrahmen mit einer Rahmeneinfassung für ein transparentes Bild. Eine im Bilderrahmen angeordnete Leuchtquelle ermöglicht eine gleichmäßige Ausleuchtung des transparenten Bildes. Die Rahmeneinfassung weist zudem eine zur Bildebene parallel ausgerichtete Rückwand mit einer Reflexionsschicht auf.

DE 203 10 788 U1 offenbart eine beleuchtete Fensterscheibe bei der Leuchtdioden seitlich an der Fensterscheibe angeordnet sind. Durch die Beleuchtung lässt sich die Scheibe optisch hervorheben und mögliche Werbeschriftzüge und Symbole selbstleuchtend darstellen. Die Diodenbeleuchtung lässt sich sowohl an neuen als auch an schon bestehenden Fensterscheiben einfach anbringen, beziehungsweise nachrüsten.

EP 0 324 710 A1 offenbart eine beleuchtete Isolierglasscheibe. Dabei wird der Zwischenraum zwischen den beiden Scheiben von einer langgestreckten Leuchte ausgeleuchtet. Zusätzlich kann im Zwischenraum eine Kunststoffscheibe angeordnet sein. Diese kann mit Mustern, Schriftzeichen und Symbolen versehen sein, die beispielsweise durch Gravur oder Siebdruckverfahren aufgebracht werden. Die Leuchtquelle sorgt für ein helles Aufleuchten der entsprechenden Elemente und verstärkt somit die vorhandene Sichtbarkeit der entsprechenden Elemente.

Die Aufgabe der Erfindung liegt darin, eine Scheibe mit Leuchtfeldern bereitzustellen, die bei eingeschalteter Lichtquelle hell aufleuchten und bei ausgeschalteter Lichtquelle optisch transparent sind. Die Leuchtfelder sollen zudem an einer beliebigen Stelle der Scheibe angeordnet werden können, wobei die restlichen Bereiche der Scheibe keine oder nur geringfügige Mengen Licht emittieren.

Die Aufgabe der vorliegenden Erfindung wird erfindungsgemäß durch eine Scheibe mit mindestens einem Leuchtfeld nach den unabhängigen Ansprüchen 1, 13, und 15 gelöst. Bevorzugte Ausführungen gehen aus den Unteransprüchen hervor.

Die Scheibe mit mindestens einem Leuchtfeld umfasst wenigstens eine Grundscheibe und mindestens ein auf der Grundscheibe aufgebrachtes Leuchtfeld. Unter dem Begriff "Grundscheibe" wird im Rahmen der Erfindung nur die reine Scheibe ohne Leuchtfeld und Leuchtquelle verstanden.

Bei der Grundscheibe kann es sich um eine Einfach- oder Mehrfachscheibe, Verbundscheibe und/oder Sicherheitsscheibe handeln. Die Scheiben können Glas und/oder Polymere, bevorzugt transparente, organische Polymere enthalten.

Das Leuchtfeld ist direkt auf der Grundscheibenoberfläche angebracht, bei Verbundscheiben kann es auch auf der Oberfläche zwischen den beiden Grundscheiben angeordnet sein. Das Leuchtfeld umfasst mindestens eine Trägermatrix und Leuchtpartikel. Unter Leuchtpartikel werden Teilchen, insbesondere anorganische und/oder organische Pigmente oder Farbstoffe verstanden, die in die Scheibe eingestrahltes Licht entweder streuen oder durch Lumineszenzprozesse emittieren.

Bei der Lichtstreuung werden in Abhängigkeit von der Wellenlänge des eingestrahlten Lichts, dem Streuwinkel und der Partikelgröße der Leuchtpartikel verschiedene Wellenlängen des Lichts unterschiedlich stark gestreut. Insbesondere kurzwelliges Licht wird stärker als langwelliges Licht gestreut. In Abhängigkeit von den genannten Parametern kann das Leuchtfeld in unterschiedlichen Farben leuchten, beziehungsweise bestimmte Farbanteile verstärken.

Unter Lumineszenz werden sowohl Fluoreszenz als auch Phosphoreszenz verstanden. Bei beiden Prozessen erfolgt auf die Anregung durch elektromagnetische Strahlung geeigneter Wellenlänge die Emission von elektromagnetischer Strahlung. Diese wird als Leuchten auf der Scheibe sichtbar. Da bei der Phosphoreszenz die Übergänge zwischen den Energieniveaus spinverboten sind, kann die Emission von Licht zeitverzögert erfolgen. Somit ist bei der Phosphoreszenz auch ein Nachleuchten des Leuchtfeldes bei ausgeschalteter Leuchtquelle möglich.

Sowohl die Lichtstreuung als auch die Lumineszenz ermöglichen das Abstrahlen des in die Scheibe eingestrahlten und eingekoppelten Lichts am Leuchtfeld. Das Leuchtfeld kann auch Leuchtpartikel zur Lichtstreuung und Lumineszenz enthalten. Die Leuchtpartikel haben bevorzugt hohe Brechungsindices von 1,5 bis 2,5, besonders bevorzugt 2 bis 2,3.

Die Leuchtpartikel werden in einer geeigneten Trägermatrix auf der Grundscheibenoberfläche fixiert und bilden so das Leuchtfeld. Bevorzugt enthält die Trägermatrix 0,1 Gew. % bis 30 Gew. % Leuchtpartikel, besonders bevorzugt 5 Gew. % bis 10 Gew. %. Bei der Trägermatrix kann es sich um eine geeignete Suspension, Emulsion und/oder Mikroemulsion handeln, die auf der Grundscheibenoberfläche zusammen mit den Leuchtpartikeln, bevorzugt in einer Schablone, aushärtet. Geeignete polymerisierbare Verbindungen sind beispielsweise Alkylmethacrylate. Beispiele für geeignete Emulsionen finden sich beispielsweise bei "O. Lade, K. Beizai, T. Sottmann, and R. Strey Polymerizable nonionic microemulsions: Phase behavior of H₂O - *n*-alkyl methacrylate - *n*-alkyl poly(ethylene glycol) ether (CᵢEⱼ) Langmuir, 16 (9), 4122 (2000)".

Die Trägermatrix kann auch als dünner, transparenter Film ausgebildet sein, der auf der Grundscheibenoberfläche aufgeklebt wird. In dieser Ausführungsform werden die Leuchtpartikel bevorzugt bei der Herstellung des dünnen transparenten Films in die Trägermatrix integriert und anschließend auf die Scheibenoberfläche aufgeklebt.

Am Rand der Grundscheibe ist mindestens eine Leuchtquelle angeordnet. Über diese wird Licht in die Scheibe eingestrahlt beziehungsweise eingekoppelt.

Die Leuchtquelle umfasst bevorzugt Glühbirnen, Laser, LEDs (Light Emitting Diode) und/oder OLEDs (Organic Light Emitting Diode), besonders bevorzugt LEDs und OLEDs. Diese Leuchtquellen weisen einen geringen Stromverbrauch und schmale Wellenlängenbereiche auf. Geeignete Bereiche sind beispielsweise 515 nm bis 525 nm, 620 nm bis 630 nm oder 465 nm bis 475 nm. In Abhängigkeit von der erforderlichen Wellenlängenbreite, beispielsweise bei weißem Licht, können LEDs verschiedener Wellenlängen kombiniert werden oder LEDs mit einem photolumineszierenden Leuchtstoff verwendet werden.

Die Leuchtquelle emittiert bevorzugt Licht der Wellenlänge 250 nm bis 1000 nm, besonders bevorzugt 400 nm bis 800 nm.

Die Leuchtquelle emittiert bevorzugt monochromatisches Licht mit einer Halbwertsbreite kleiner 30 nm, bevorzugt kleiner 15 nm und besonders bevorzugt kleiner 5 nm.

Die Leuchtpartikel weisen bevorzugt einen Partikeldurchmesser von 1 nm bis 5 µm auf, bevorzugt 5 nm bis 100 nm für lumineszierende Leuchtpartikel und/oder 100 nm bis 600 nm für streuende hochbrechende Leuchtpartikel.

Die Leuchtpartikel und lumineszierenden Partikel enthalten bevorzugt BaTiO₃, LiNbO₃, KNbO₃, LiTaO₃, PbS, CdSe, CdS, InP, CdTe oder Gemische davon.

Die Trägermatrix enthält bevorzugt ein Polymer, besonders bevorzugt ein optisch transparentes Polymer. Beispiele für geeignete, optisch transparente Polymere sind Polymethacrylsäure/ester, PBT (Polybutylenterephthalat), PC (Polycarbonat), PET (Polyethylenterephthalat), EVA (Ethylvinylacetat), PVB (Polyvinylbutyral), PE (Polyethylen), PP (Poylpropylen) und/oder Blockpolymere oder Copolymere davon. Neben dem eigentlichen Polymer kann die Trägermatrix auch Stabilisatoren wie Antioxidantien oder UV-Stabilisatoren wie Hydroxybenzophenon und Dialkyldithiocarbamate enthalten.

Die Trägermatrix enthält bevorzugt eine optisch transparente Siebdruckfarbe. Diese kann besonders bevorzugt mit Hilfe geeigneter Siebe zusammen mit den Leuchtpartikeln auf der Grundscheibe aufgedruckt werden. Beispiele geeigneter Siebdruckfarben sind 3M^{™} Scotchlite, Transparente Siebdruckfarben, Serie 2900.

Die Trägermatrix weist bevorzugt eine Schichtdicke von 1 µm bis 5 mm, besonders bevorzugt 10 µm bis 2 mm und insbesondere bevorzugt von 20 µm bis 1 mm auf.

Die Grundscheibe enthält bevorzugt einen der Werkstoffe Glas und/oder Polymer, bevorzugt Flachglas und/oder Polymethylmethacrylat.

Das Leuchtfeld bedeckt bevorzugt 1 % bis 30 %, bevorzugt 5 % bis 10 % der Scheibe. Es können auch mehrere Leuchtfelder auf verschiedenen Positionen der Grundscheibe angeordnet werden.

Das Leuchtfeld weist bevorzugt rechteckige, trapezförmige, mehreckige und/oder abgerundete Formen auf.

Das Leuchtfeld weist bevorzugt eine Schichtdicke von 1 µm bis 5 mm, besonders bevorzugt 10 µm bis 2 mm und insbesondere bevorzugt von 20 µm bis 1 mm auf.

Das Leuchtfeld weist bevorzugt eine mittlere Transmission der Wellenlängen 300 nm bis 800 nm von mehr als 70 %, besonders bevorzugt mehr als 80 % auf. Die hohe Transmission gewährleistet, dass das Leuchtfeld bei nicht eingeschalteter Leuchtquelle nicht zu sehen ist.

Auf der der Grundscheibe abgewandten Seite des Leuchtfelds sind bevorzugt mindestens eine Zwischenschicht, beispielsweise optisch transparente Polymere wie PVB (Polyvinylbutyral) oder EVA (Ethylenvinylacetat), und mindestens eine zweite Grundscheibe angeordnet. In dieser Ausführungsform wird das Leuchtfeld auf der Oberfläche einer Grundscheibe aufgebracht und zusammen mit einer Klebefolie, und einer zweiten, bevorzugt gleich großen, Grundscheibe einlaminiert. In dieser Ausführungsform ist das Leuchtfeld in einer Verbundglasscheibe gegenüber äußeren Einflüssen besser geschützt.

Das Leuchtfeld weist auf der der Grundscheibe abgewandten Seite bevorzugt eine reflektierende Beschichtung, besonders bevorzugt silberhaltige Beschichtung auf. Der Ausdruck "reflektierende Beschichtung" bezieht sich auf eine Beschichtung die elektromagnetische Strahlung der Wellenlänge 300 nm bis 1000 nm reflektiert. Die Beschichtung reflektiert dabei bevorzugt mehr als 40 %, besonders bevorzugt mehr als 60 % der elektromagnetischen Strahlung zurück ins Leuchtfeld.

Weiterhin umfasst die Erfindung ein Verfahren zur Herstellung einer Scheibe mit Leuchtfeldern. Eine Zusammensetzung enthaltend eine Trägermatrix mit Leuchtpartikeln wird auf mindestens einer Stelle der Grundscheibe aufgebracht. Bei den Leuchtpartikeln kann es sich um die gleichen Substanzen oder um Substrate, im gleichen Größenbereich und/oder in unterschiedlichen Größenbereichen handeln. Auch unterschiedliche Substanzen sind möglich. Die Auftragung der Trägermatrix mit Leuchtpartikeln kann beispielsweise als flüssige, aushärtbare Lösung erfolgen. Eine entsprechende Schablone kann in diesem Fall die entsprechenden Bereiche für das Leuchtfeld abgrenzen. Eine weitere Möglichkeit ist das Aufbringen einer Trägermatrix in Form eines transparenten Polymerfilms in dem die Leuchtpartikel eingearbeitet sind. Bei dieser Methode können die Leuchtfelder vorgefertigt werden und anschließend einfach auf die Grundscheibe aufgeklebt werden. Abschließend wird mindestens eine Leuchtquelle am äußeren Rand der Grundscheibe angebracht und die Leuchtquelle mit elektrischen Anschlüssen versehen.

Das Leuchtfeld wird bevorzugt mittels eines Druckverfahrens, besonders bevorzugt mittels eines Siebdruckverfahrens und/oder InkJet-Verfahrens aufgetragen. Die Siebdruckfarbe fungiert als Trägermatrix in die die Leuchtpartikel beigemischt sind. Der Siebdruck kann kontinuierlich oder diskret mit Rasterung erfolgen. Das Muster der Rasterung sollte zur Mitte der Grundscheibe und damit steigendem Abstand zur Leuchtquelle hin zunehmen um eine homogene Lichtverteilung zu gewährleisten. Ein Sieb wird bevorzugt verwendet, um ein Verlaufen der Siebdruckfarbe vor dem Aushärten oder Trocknen zu vermeiden.

Die Erfindung umfasst des Weiteren die Verwendung der erfindungsgemäßen Scheibe in Gebäuden, Möbeln, Fahrzeugen, Flugzeugen, Hubschraubern und Schiffen. Die erfindungsgemäße Scheibe kann beispielsweise zur künstlerischen Gestaltung oder als Werbeträger genutzt werden. Auch die Verwendung als Scheibe mit Signalfeldern ist möglich.

Die erfindungsgemäße Scheibe wird bevorzugt als Heckscheibe eines Fahrzeuges, bevorzugt als Heckscheibe mit integriertem Blinker und/oder Bremslicht verwendet.

Im Folgenden wird die Erfindung anhand der Figuren 1 bis 6 erläutert. Die Figuren sind rein schematische Darstellungen und sind nicht maßstabsgetreu. Sie beschränken die Erfindung in keiner Weise.

Die Erfindung wird anhand der Zeichnungen näher erläutert. Es zeigen:
Figur 1 einen schematischen Querschnitt der erfindungsgemäßen Scheibe (6),
Figur 2 einen schematischen Querschnitt einer bevorzugten Ausführungsform der erfindungsgemäßen Scheibe (6),
Figur 3 einen schematischen Querschnitt einer weiteren bevorzugten Ausführungsform der erfindungsgemäßen Scheibe (6),
Figur 4 einen schematischen Querschnitt des erfindungsgemäßen Leuchtfeldes (2),
Figur 5 eine schematische Ansicht einer bevorzugten Ausführungsform der Scheibe (6) mit ausgeschalteter Leuchtquelle (3),
Figur 6 eine schematische Ansicht einer bevorzugten Ausführungsform der Scheibe (6) mit eingeschalteter Leuchtquelle (3).

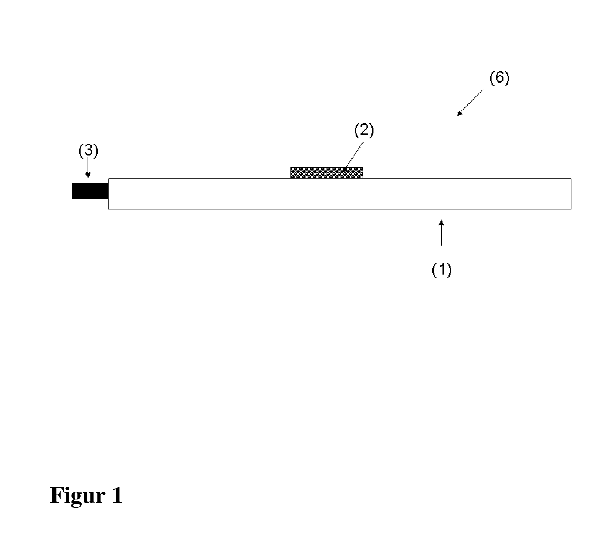

Figur 1 zeigt die erfindungsgemäße Scheibe (6) im Querschnitt. Auf der Oberfläche der Grundscheibe (1) befindet sich das Leuchtfeld (2). Am Rand der Grundscheibe (1) ist eine Leuchtquelle (3) angebracht, über die Licht in die Grundscheibe (1) eingekoppelt wird. Teile des eingestrahlten Lichts werden an dem Leuchtfeld (2) gestreut und erzeugen so ein helles Aufleuchten des Leuchtfeldes (2).

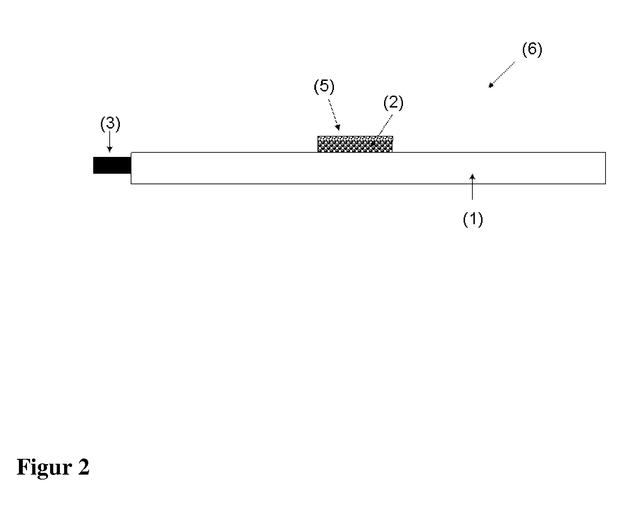

Figur 2 zeigt eine bevorzugte Ausführungsform der erfindungsgemäßen Scheibe (6) im Querschnitt. Die Scheibe (6) weist den vorangehend beschriebenen Aufbau auf. Zusätzlich enthält das Leuchtfeld (2) auf der der Grundscheibe (1) abgewandten Seite eine reflektierende Beschichtung (5). Diese reflektiert Licht, das aus der Rückseite des Leuchtfeldes (2) austritt, wird wieder zurück ins Leuchtfeld (2) reflektiert und verstärkt so die Helligkeit des Leuchtfeldes (2).

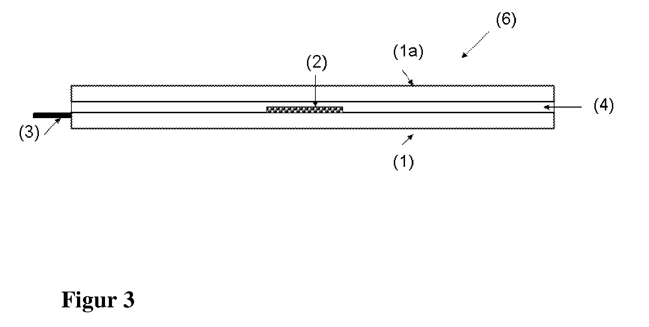

Figur 3 zeigt eine weitere bevorzugte Ausführungsform der erfindungsgemäßen Scheibe (6) im Querschnitt. Das Leuchtfeld (2) ist auf der Oberfläche der Grundscheibe (1) angebracht. Abgeschlossen wird das Leuchtfeld (2) von einer Zwischenschicht (4), beispielsweise aus EVA (Ethylvinylacetat) oder PVB (Polyvinylbutyral) und einer weiteren Grundscheibe (1a). Das Leuchtfeld kann auch an der Oberfläche der beiden Grundscheiben (1a, 1) angebracht sein. Die Integrierung des Leuchtfeldes in der Zwischenschicht einer Verbundglasscheibe aus (1a) und (1) erhöht die Stabilität und Lebensdauer des Leuchtfeldes (2), da dieses in dieser Ausführungsform nicht mehr den Umwelteinflüssen ausgesetzt ist. Eine an der Grundscheibe (1) angebrachte Leuchtquelle (3) emittiert elektromagnetische Strahlung, die am Leuchtfeld (2) gestreut wird und ein Aufleuchten des Leuchtfelds (2) bewirkt.

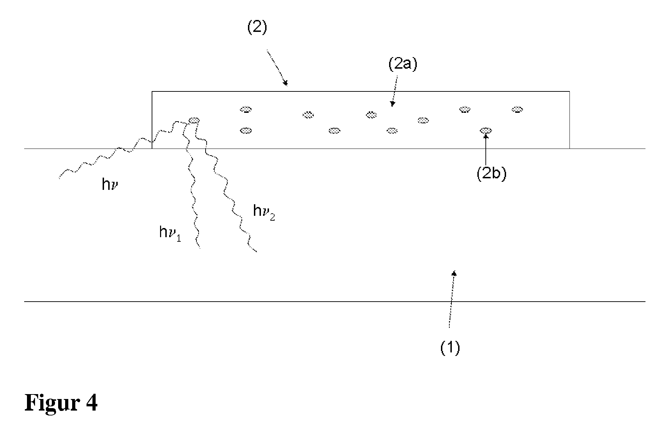

Figur 4 zeigt einen schematischen Querschnitt des Leuchtfeldes (2). Aus der Leuchtquelle (3) (nicht dargestellt) emittiertes Licht hν wird an den Leuchtpartikeln (2b) gestreut. Das resultierende Streulicht hν₁ und hν₂ wird durch die Grundscheibe (1) nach außen emittiert und bewirkt so ein Aufleuchten des Leuchtfeldes (2). Die Wellenlängen hν₁ und hν₂ stehen im Rahmen der Erfindung stellvertretend für die beim Streu- oder Lumineszenzprozess von den Leuchtpartikeln emittierten Wellenlängenverteilung hν₁, hν₂, .... bis hνₙ.

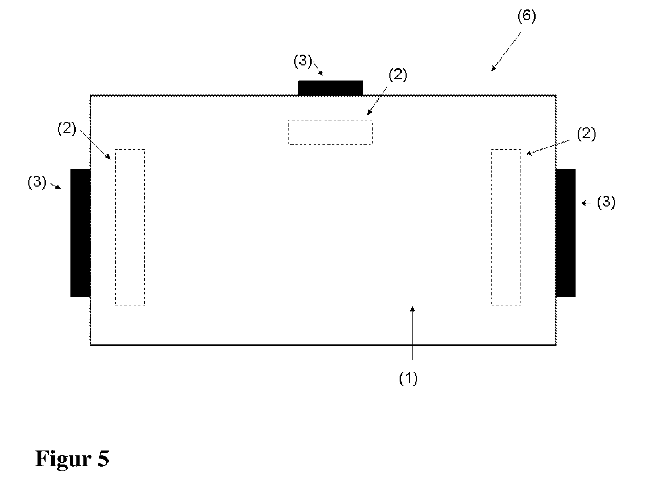

Figur 5 zeigt eine schematische Ansicht einer bevorzugten Ausführungsform der Scheibe (6) mit ausgeschalteter Leuchtquelle (3). Die Scheibe (6) wird in Figur 5 als Heckscheibe eines Fahrzeuges verwendet. Prinzipiell ist mit dem gleichen Aufbau aber auch eine Verwendung als Bauglas möglich. Die Leuchtfelder (2) sind optisch transparent und heben sich nicht von der Grundscheibe (1) ab. Am Rand der Grundscheibe (1) sind rechts, links und oben Leuchtquellen (3) angebracht, die in Figur 5 kein Licht emittieren. Die eigentliche Grundscheibe (1) der erfindungsgemäßen Scheibe (6) ist in diesem lichtlosen Zustand optisch fast nicht von einer Scheibe ohne Leuchtfelder (2) zu unterscheiden.

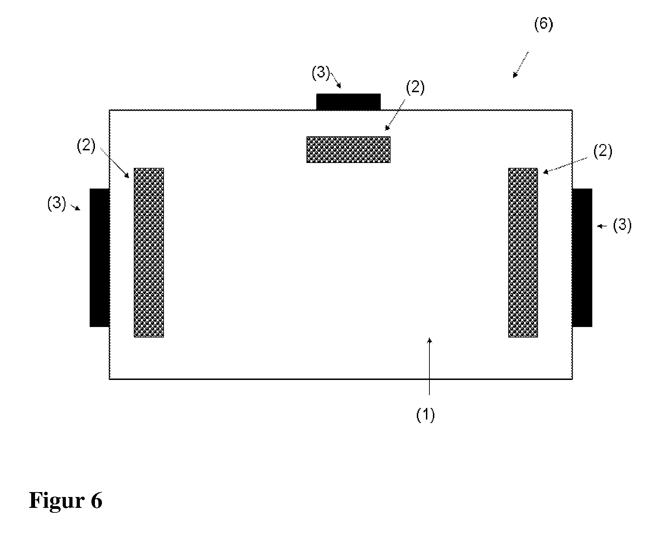

Figur 6 zeigt eine schematische Ansicht einer bevorzugten Ausführungsform der Scheibe (6) mit eingeschalteter Leuchtquelle (3). Der grundsätzliche Aufbau entspricht dem in Figur 5 gezeigten. Die Leuchtquelle (3) emittiert in Figur 6 Licht und bewirkt so ein Aufleuchten der Leuchtfelder (2). Die Leuchtfelder (2) können somit bei einer Heckscheibe eines Fahrzeuges beispielsweise die Funktion der Bremsleuchte und/oder der Blinker übernehmen.

Die Bezugszeichen bedeuten dabei:
(1) Grundscheibe,
(1a) obere Grundscheibe,
(2) Leuchtfeld,
(2a) Trägermatrix,
(2b) Leuchtpartikel,
(3) Leuchtquelle,
(4) Zwischenschicht,
(5) reflektierende Beschichtung,
(6) erfindungsgemäße Scheibe,
(hν) emittiertes Licht und
(hν₁, hν₂ ) gestreutes und/oder emittiertes Licht.

## Patentansprüche

1. Scheibe mit mindestens einem Leuchtfeld umfassend:
a) eine Grundscheibe (1),
b) mindestens ein auf der Grundscheibe (1) aufgebrachtes Leuchtfeld (2) umfassend:
b.1) eine Trägermatrix (2a),
b.2) Leuchtpartikel (2b) und
c) mindestens eine am Rand der Grundscheibe (1) angeordnete Leuchtquelle (3).

2. Scheibe nach Anspruch 1, wobei die Leuchtquelle (3) mindestens eine Glühbirne, Laser, LED und/oder OLED und/oder Anordnungen davon umfasst.

3. Scheibe nach Anspruch 1 oder 2, wobei die Leuchtquelle (3) Licht der Wellenlänge 250 nm bis 1000 nm, bevorzugt 400 nm bis 800 nm, emittiert.

4. Scheibe nach einem der Ansprüche 1 bis 3, wobei die Leuchtquelle (3) monochromatisches Licht mit einer Halbwertsbreite kleiner 30 nm, bevorzugt kleiner 15 nm und besonders bevorzugt kleiner 5 nm emittiert.

5. Scheibe nach einem der Ansprüche 1 bis 4, wobei die Leuchtpartikel (2b) einen Partikeldurchmesser von 1 nm bis 5 µm, bevorzugt 5 nm bis 100 nm für lumineszierende Leuchtpartikel und/oder 100 nm bis 600 nm für streuende hochbrechende Leuchtpartikel aufweisen.

6. Scheibe nach einem der Ansprüche 1 bis 5, wobei die Leuchtpartikel (2b) lumineszierende Partikel und/oder lumineszierende Farbstoffe, bevorzugt mindestens ein anorganisches Pigment, besonders bevorzugt BaTiO₃, LiNbO₃, LiTaO₃, KNbO₃, PbS, CdSe, CdS, InP, CdTe und/oder Gemische davon enthalten.

7. Scheibe nach einem der Ansprüche 1 bis 6, wobei die Trägermatrix (2a) ein Polymer, bevorzugt ein optisch transparentes Polymer, besonders bevorzugt Polymethacrylsäure/ester, PBT (Polybutylenterephthalat), PC (Polycarbonat), PET (Polyethylenterephthalat), EVA (Ethylvinylacetat), PVB (Polyvinylbutyral), PE (Polyethylen), PP (Poylpropylen) und/oder Blockpolymere oder Copolymere davon enthält.

8. Scheibe nach einem der Ansprüche 1 bis 7, wobei die Trägermatrix (2a) eine optisch transparente Siebdruckfarbe enthält.

9. Scheibe nach einen der Ansprüche 7 oder 8, wobei die Trägermatrix (2a) und/oder das Leuchtfeld (2) eine Schichtdicke von 1 µm bis 5 mm, bevorzugt 10 µm bis 2 mm und besonders bevorzugt von 20 µm bis 1 mm aufweisen.

10. Scheibe nach einem der Ansprüche 1 bis 9, wobei das Leuchtfeld (2) eine mittlere Transmission der Wellenlängen 300 nm bis 800 nm von mehr als 70 %, bevorzugt mehr als 80 % aufweist.

11. Scheibe nach einem der Ansprüche 1 bis 10, wobei auf der der Grundscheibe (1) abgewandten Seite des Leuchtfelds (2) mindestens eine Zwischenschicht (4) und mindestens eine zweite Grundscheibe (1a) angeordnet sind und zusammen mit der Grundscheibe (1) eine Verbundglasscheibe bilden.

12. Scheibe nach einem der Ansprüche 1 bis 11, wobei das Leuchtfeld (2) auf der der Grundscheibe (1) abgewandten Seite eine reflektierende Beschichtung (5) aufweist.

13. Verfahren zur Herstellung einer Scheibe mit schaltbaren Leuchtfeldern umfassend:
a) Aufbringen einer Zusammensetzung, enthaltend eine Trägermatrix (2a) mit Leuchtpartikeln (2b), auf mindestens einer Stelle der Grundscheibe (1),
b) Anbringen mindestens einer Leuchtquelle (3) am Rand der Grundscheibe (1) und
c) Anbringen eines elektrischen Anschlusses an der Leuchtquelle (3).

14. Verfahren nach Anspruch 13, wobei das Leuchtfeld (2) mittels eines Druckverfahrens, bevorzugt mittels eines Siebdruckverfahrens und/oder InkJet-Verfahrens aufgetragen wird.

15. Verwendung der Scheibe nach einem der Ansprüche 1 bis 12 in Gebäuden, Möbeln, Fahrzeugen, Flugzeugen, Hubschraubern und Schiffen, bevorzugt als Heckscheibe eines Fahrzeuges, besonders bevorzugt als Heckscheibe mit integrierten Blinker und/oder Bremslicht.
